# EUROPÄISCHE PATENTSCHRIFT

(11) **EP 3 655 726 B1**
(45) Veröffentlichungstag und Bekanntmachung des Hinweises auf die Patenterteilung: **06.05.2026**
(21) Anmeldenummer: 18728583.8
(22) Anmeldetag: 28.05.2018
(51) Int. Cl.: G01C 21/36, G08G 1/14, G08G 1/01

(54) **VERFAHREN ZUM ERMITTELN EINES VON EINEM BESTIMMUNGSORT VERSCHIEDENEN ZIELORTES, SYSTEM UND DAMIT AUSGERÜSTETES KRAFTFAHRZEUG**
METHOD FOR DETERMINING A DESTINATION DIFFERENT FROM AN INTENDED LOCATION, SYSTEM, AND MOTOR VEHICLE EQUIPPED THEREWITH
PROCÉDÉ DE DÉTERMINATION D'UN LIEU DE DESTINATION DIFFÉRENT D'UN LIEU DÉFINI, SYSTÈME ET VÉHICULE AUTOMOBILE ÉQUIPÉ DUDIT SYSTÈME

(30) Priorität: 18.07.2017 DE 102017212263
(43) Veröffentlichungstag der Anmeldung: 27.05.2020
(73) Patentinhaber: Volkswagen Aktiengesellschaft, 38440 Wolfsburg (DE)
(72) Erfinder: MAX, Stephan, 38518 Gifhorn (DE); GÜNZEL, Thorben, 38118 Braunschweig (DE)
(86) Internationale Anmeldenummer: PCT/EP2018/063870
(87) Internationale Veröffentlichungsnummer: WO 2019/015834

(56) Entgegenhaltungen:
- DE-A1- 102009 054 292
- DE-A1- 102011 003 772
- DE-A1- 102013 019 262
- DE-A1- 102014 214 758
- DE-A1- 102015 220 462
- US-A1- 2013 265 174
- US-A1- 2014 058 711

## Beschreibung

Die Erfindung betrifft ein Verfahren zum Ermitteln eines von einem Bestimmungsort verschiedenen Zielortes für ein Kraftfahrzeug. Die Erfindung betrifft auch ein System zum Ermitteln eines von einem Bestimmungsort verschiedenen Zielortes für ein Kraftfahrzeug und ein Kraftfahrzeug mit einem System.

Aus dem allgemeinen Stand der Technik sind Navigationsgeräte bekannt, welche dazu eingerichtet sind, zu einer bereits bestimmten Route des Kraftfahrzeugs von einem Abfahrort zu einem Zielort eine alternative Route zu berechnen, wenn sich beispielsweise auf der bereits bestimmten Route ein Stau oder ein weiteres Verkehrshindernis bildet.

Basierend auf diesem Prinzip beschreibt beispielsweise die DE 10 2015 008 174 A1 ein Verfahren zum Bereitstellen einer alternativen Reiseroute für ein Kraftfahrzeug. Bei diesem Verfahren empfängt eine fahrzeugexterne Verarbeitungseinheit von einer Navigationseinrichtung des Kraftfahrzeugs und zumindest eines weiteren Kraftfahrzeugs jeweils ein Reiseroutensignal, das die geplante Reiseroute und ein Reiseziel des Kraftfahrzeugs und des zumindest einen weiteren Kraftfahrzeugs beschreibt. Anhand der empfangenen Reiseroutensignale wird ein geographischer Sektor ermittelt, in dem das jeweilige geplante Reiseziel liegt. Die Verarbeitungseinrichtung ist dazu eingerichtet, anhand aller empfangenen Reiseroutensignale ein digitales Modell für den geographischen Sektor zu erstellen und ein Verkehrsaufkommen innerhalb des geographischen Sektors zu prädizierten. Anhand des prädizierten Verkehrsaufkommens ermittelt die Verarbeitungseinrichtung die alternative Reiseroute und überträgt diese an die Navigationseinrichtung des Kraftfahrzeugs.

In der US 2014/0309921 A1 ist ein Navigationssystem beschrieben. Das Navigationssystem ist dazu eingerichtet, einen Nutzer zu einem Zielort basierend auf Nutzerprofildaten und einer Fahrhistorie des Nutzers oder eines weiteren Nutzers zu führen. Das Navigationssystem umfasst ein Kraftfahrzeugkontrollsystem, welches dazu eingerichtet ist, die Route zu dem Zielort zu bestimmen. Ferner ist das Kraftfahrzeugkontrollsystem dazu eingerichtet, ein Aufkommen an dem Zielort zu ermitteln. Schließlich ist das Kraftfahrzeugkontrollsystem dazu eingerichtet, eine alternative Route zu dem Zielort zu bestimmen, sofern dies in Abhängigkeit von dem Aufkommen an den Zielort notwendig ist. Zum Erfassen eines Aufkommens, insbesondere einer Person in einem Umfeld des Kraftfahrzeugs, beschreibt die DE 10 2012 005 396 A1 beispielsweise ein Verfahren zur kraftfahrzeugseitigen Erfassung von Daten zu einer fahrzeugexternen Person.

Der Nachteil derartiger Navigationssysteme besteht darin, dass diese zwar eine alternative Route zu dem Zielort bestimmen, jedoch keine nähere Auskunft über das aktuelle und/oder zukünftige Geschehen oder das aktuelle und/oder zukünftige Aufkommen an dem Zielort geben. Besteht an dem gewünschten Zielort ein hohes Verkehrsaufkommen, so ist es für den Fahrer an diesem Zielort schwierig beispielsweise einen Parkplatz zu finden.

Anstelle auf Basis von vorbestimmten Verkehrsbedingungen auf der geplanten Route eine alternative Route zu berechnen, ist es aus der EP 1 455 321 A2 bekannt, auf Basis von Ortsdaten, der geplanten Ankunftszeit und weiteren Daten zu bestimmen, ob die geplante Ankunftszeit eingehalten werden kann oder nicht. Auch hier besteht das Problem, dass keine Angaben gemacht werden über ein aktuelles und/oder zukünftiges Aufkommen an dem Zielort selbst, auf das sich der Fahrer des Kraftfahrzeugs einzustellen hat, auch wenn die Ankunftszeit nicht eingehalten werden könnte.

In der US 2013/0265174 A1 ist ein Verfahren zum Verwalten von Parkplätzen beschrieben. Bei den Verfahren wird zunächst ein Zielort empfangen. Anschließend werden Parkplätze, welche dem Zielort zugewiesen sind, aus einer Parkplatzdatenbank gesucht. In einem weiteren Verfahrensschritt werden Parkplatzinformationen von der Parkplatzdatenbank empfangen. Ferner werden die möglichen Parkplätze nach einem Auswahlalgorithmus sortiert. In einem darauffolgenden Verfahrensschritt wird eine Routennavigation von dem Zielort zu einem Parkplatz auf Basis von Parkkriterien bereitgestellt.

In der US 2014/0058711 A1 ist ein System beschrieben, welches dazu eingerichtet ist, einen Zustand eines Parkplatzes (z.B. belegt oder leer) vorherzusagen. Eine Korrelation zwischen Modellierungsvariablen (z.B. Wetter, Nähe zu einem Standort, Ereigniskalender, Sensordaten usw.) und einem möglichen Zustand des Parkplatzes kann modelliert werden. Der Zustand eines Parkplatzes kann dann anhand des Modells und der aktuellen Werte für eine oder mehrere Variablen (z.B. für die Modellentwicklung) vorhergesagt werden. Dabei können Darstellungen eines oder mehrerer Parkplätze auf einer Karte dargestellt und mit Indikatoren (z.B. Farben) markiert werden, die auf eine Wahrscheinlichkeit hinweisen, dass die jeweiligen Parkplätze über eine Verfügbarkeit verfügen, oder auf die Anzahl der verfügbaren Parkplätze, z.B. gelb für eine geringe Verfügbarkeit, grün für eine hohe Verfügbarkeit.

In der DE 10 2014 214 758 A1 ist ein Verfahren für ein Navigationssystem eines Fahrzeugs beschrieben. Bei dem Verfahren werden mögliche Parkplätze innerhalb eines vorgegebenen Umkreises um einen eingestellten Zielort bestimmt und einem jeweiligen der möglichen Parkplätze eine jeweilige Kosteninformation zugeordnet. Die Kosteninformation zeigt Parkgebührenkosten für den jeweiligen Parkplatz an. Ferner wird eine Besiedlungsdichteinformation für den Zielort bereitgestellt, welche eine Besiedlungsdichte an dem Zielort anzeigt. Des Weiteren wird eine Empfehlung für mindestens einen der möglichen Parkplätze in Abhängigkeit von der Besiedlungsdichteinformation und der Kosteninformation bestimmt.

Die DE 10 2013 019262 A1 beschreibt ein Verfahren zum Unterstützen einer Suche nach einem Parkplatz für ein Kraftfahrzeug sowie ein System zum Unterstützen einer Suche nach einem Parkplatz für ein Kraftfahrzeug. Hierbei wird für eine von dem Fahrer oder der Fahrerin bevorzugte, auf den Zielort bezogene Parkeinrichtung Werte für den Belegungszustand ermittelt und der Datenverarbeitungsanlage zyklisch bereitgestellt, wobei aus den zyklisch bereitgestellten Werten eine zeitabhängige Funktion für den Belegungszustand der bevorzugten Parkeinrichtung ermittelt wird, und wobei aus einem Verlauf der zeitabhängigen Funktion bestimmt wird, ob bis zu der geplanten Ankunft des Kraftfahrzeugs in der bevorzugten Parkeinrichtung ein Parkplatz frei ist bzw. sein wird. Mit der zeitabhängigen Funktion werden ein absoluter Wert für freie, in der mindestens einen Parkeinrichtung vorhandene Parkplätze sowie die zeitliche Änderung dieses Werts bestimmt. Der Wert und dessen über die Funktion darstellbarer Verlauf wird zudem mit dem vorgesehenen Minimalwert verglichen. Somit wird tendenziell ausgerechnet und vorhergesagt, ob in dem bevorzugten Parkhaus bis zur geplanten Ankunft des Kraftfahrzeugs noch zumindest ein freier Parkplatz vorhanden ist, falls nicht, wird eine zeitabhängige Funktion für den Belegungszustand von mindestens einer weiteren Parkeinrichtung ermittelt.

Die DE 10 2015 220462 A1 beschreibt ein System und ein Verfahren zum Vorhersagen von Überlastungen an einem Ziel. Das System ist dazu ausgelegt, mit einem Fernserver zu kommunizieren, um vorherzusagen wie viele Personen sich an der ausgewählten Position befinden. Der Server kann vorhersagen wie viele Personen sich an einer besonderen Position und/oder in einem Umgebungsgebiet einer Position aufhalten.

Die DE 10 2011 003772 A1 beschreibt die Unterstützung eines Fahrers eines ersten Fahrzeugs beim Auffinden einer Parkmöglichkeit für das erste Fahrzeug, wobei von einem zweiten Fahrzeug ein freier Parkplatz ermittelt und dies dem Fahrer des ersten Fahrzeugs mittels "Car-to-Car" Kommunikation entsprechend mitgeteilt wird.

Deshalb ist es Aufgabe der vorliegenden Erfindung daher, ein verbessertes Verfahren und System zum Ermitteln eines Zielortes für ein Kraftfahrzeug bereitzustellen, welches den Zielort derart bestimmt, dass dieser für einen Nutzer, insbesondere zeitlich, besonders effizient ist.

Diese Aufgabe wird durch ein Verfahren zum Ermitteln eines von einem Bestimmungsort verschiedenen Zielortes für ein Kraftfahrzeug sowie durch ein System zum Ermitteln eines von einem Bestimmungsort verschiedenen Zielortes für ein Kraftfahrzeug mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Bei dem Verfahren zum Ermitteln eines von einem Bestimmungsort verschiedenen Zielortes für ein Kraftfahrzeug wird zunächst ein Bestimmungsort vorgegeben. Beispielsweise kann der Bestimmungsort durch einen Nutzer des Kraftfahrzeugs vorgegeben werden. Dabei kann der Nutzer des Kraftfahrzeugs, insbesondere über eine Eingabeeinrichtung, den Bestimmungsort in ein Navigationssystem oder ein Navigationsgerät des Kraftfahrzeugs eingeben. Alternativ kann es vorgesehen sein, dass zum Vorgeben des Bestimmungsortes ein Fahrverhalten des Fahrers oder eine Fahrhistorie durch eine Recheneinrichtung analysiert und ausgewertet werden. Auf Basis des Fahrverhaltens des Fahrers oder der Fahrhistorie, welche der Recheneinrichtung hinterlegt sein kann, kann der Bestimmungsort durch die Recheneinrichtung ermittelt werden. Mit "Bestimmungsort" ist insbesondere ein Ort oder eine geographische Position gemeint, zu welcher der Fahrer des Kraftfahrzeugs, insbesondere ausgehend von einem Abfahrort des Kraftfahrzeugs, zunächst geführt oder navigiert werden möchte. Der Bestimmungsort kann auch als Point of Interest (kurz POI) bezeichnet werden. Nach der Vorgabe des Bestimmungsortes kann die Recheneinrichtung dazu eingerichtet sein, eine Route zu dem Bestimmungsort und/oder eine Ankunftszeit an dem Bestimmungsort zu ermitteln.

In einem weiteren Verfahrensschritt wird eine Auslastung an dem Bestimmungsort basierend auf zu dem Bestimmungsort bereitgestellten Daten mittels einer Recheneinrichtung ermittelt. Bevorzugt kann es sich bei der Auslastung an dem Bestimmungsort um eine prädizierte Auslastung an dem Bestimmungsort und/oder um eine aktuelle Auslastung an dem Bestimmungsort handeln. Mit anderen Worten wird als die Auslastung an dem Bestimmungsort bevorzugt die aktuelle Auslastung und/oder die prädizierte Auslastung an dem Bestimmungsort bestimmt. Mit "Daten" sind hier insbesondere Informationen und/oder vorbestimmte Werte und/oder Auskünfte an oder zu dem Bestimmungsort gemeint. Die Daten zu dem Bestimmungsort können auch als Schwarmdaten bezeichnet werden. Mit "Auslastung" ist insbesondere ein Aufkommen, wie beispielsweise ein Verkehrsaufkommen, und/oder eine Anzahl an Personen oder Kraftfahrzeugen an dem Bestimmungsort gemeint. Mit anderen Worten kann in diesem Verfahrensschritt bestimmt werden, wie viel am Bestimmungsort los ist.

Bevorzugt können die zu dem Bestimmungsort bereitgestellten Daten von zumindest einem weiteren Kraftfahrzeug oder mehreren weiteren Kraftfahrzeugen bereitgestellt werden. Beispielsweise kann sich das zumindest eine weitere Kraftfahrzeug bereits an dem Bestimmungsort befinden und Daten zu dem Bestimmungsort an die Recheneinrichtung übermitteln. Zum Bestimmen der Daten kann das zumindest eine Kraftfahrzeug bevorzugt eine Erfassungseinrichtung, wie beispielsweise eine Kamera und/oder einen oder mehrere Sensoren, welche auf eine Umgebung des Kraftfahrzeugs gerichtet sind, aufweisen. Die Erfassungseinrichtung kann dazu eingerichtet sein, Personen und/oder Objekte in der Umgebung des Kraftfahrzeugs zu erfassen. Zusätzlich oder alternativ kann es vorgesehen sein, dass die zu dem Bestimmungsort bereitgestellten Daten von zumindest einer Erfassungseinrichtung an dem Bestimmungsort selbst bereitgestellt werden. So kann es vorgesehen sein, dass es sich bei der Erfassungseinrichtung um einen Parkplatzsensor eines Parkhauses oder Parkplatzes an dem Bestimmungsort handelt und diese als Daten eine Parkplatzbelegung an die Recheneinrichtung übermittelt. Zusätzlich oder alternativ kann es vorgesehen sein, dass die von den Kraftfahrzeugen und/oder von der Erfassungseinrichtung an dem Bestimmungsort bereitgestellten Daten, wie beispielsweise Parkdaten und/oder Navigationsziele und/oder Verkehrsflussdaten, an die Recheneinrichtung übermittelt und in dieser gesammelt oder gespeichert werden. Zusätzlich oder alternativ kann es vorgesehen sein, dass die Recheneinrichtung dazu eingerichtet ist, die empfangenen Daten auszuwerten. Mit anderen Worten kann die Recheneinrichtung dazu eingerichtet sein, Schwarmdaten zu analysieren. So kann die Recheneinrichtung beispielsweise dazu eingerichtet sein, eine Belegung der Parkplätze an dem Bestimmungsort und/oder einen Verkehrsfluss oder ein Verkehrsaufkommen der Kraftfahrzeuge an dem Bestimmungsort zu ermitteln.

In einem weiteren Verfahrensschritt werden mehrere von dem Bestimmungsort verschiedene mögliche alternative Zielorte auf Basis der zum Bestimmungsort bereitgestellten Daten ermittelt, wenn die Auslastung einen vorbestimmten Auslastungsschwellwert überschreitet. Mit anderen Worten kann die Recheneinrichtung dazu eingerichtet sein, eine Änderung des Bestimmungsortes aufgrund der ermittelten Auslastung an dem Bestimmungsort durchzuführen. Bevorzugt handelt es sich bei den möglichen alternativen Zielorten um Orte oder Locations der gleichen Kategorie wie der vorgegebene Bestimmungsort. Mit anderen Worten kann es sich bei den möglichen alternativen Zielorten um zu dem vorgegebenen Point of Interest alternative Points of Interest handeln. Wird beispielsweise durch den Nutzer ein Schwimmbad oder die geographische Position oder Koordinaten des Schwimmbads als Bestimmungsort vorgegeben, so werden als mögliche alternative Zielorte auch Schwimmbäder oder die geographische Position oder Koordinaten der Schwimmbäder als Zielort ermittelt oder bestimmt.

Bei dem "Auslastungsschwellwert" handelt es sich bevorzugt um einen Grenzwert oder Maximalwert der Auslastung. Wird dieser "Auslastungsschwellwert" überschritten, also ist die Auslastung an dem Bestimmungsort größer als der Auslastungsschwellwert, werden die zu dem Bestimmungsort verschiedenen möglichen alternativen Zielorte ermittelt. Dadurch ergibt sich der Vorteil, dass eine Auslastung von Bestimmungsorten ermittelt und diese für die Zielführung berücksichtigt wird.

Anschließend wird mittels der Recheneinrichtung eine prädizierte Auslastung an den möglichen Zielorten basierend auf zu den möglichen Zielorten bereitgestellten Daten ermittelt. Die Daten zu dem Zielort können auch als Schwarmdaten bezeichnet werden. Mit "prädizierten Auslastung" ist insbesondere eine voraussichtliche oder wahrscheinliche oder zukünftige Auslastung an den mehreren möglichen alternativen Zielorten gemeint. Bevorzugt können die zu den möglichen alternativen Zielorten bereitgestellten Daten in gleicher Weise, wie die zu dem Bestimmungsort bereitgestellten Daten ermittelt werden. In vorteilhafter Weise können die zu dem Zielort bereitgestellten Daten von zumindest einem weiteren Kraftfahrzeug oder mehreren weiteren Kraftfahrzeugen bereitgestellt werden. Beispielsweise können dem Bestimmungsort korrespondierender Navigationsziele der weiteren Kraftfahrzeuge berücksichtigt werden. Mit anderen Worten können die weiteren Kraftfahrzeuge die Navigationsziele, welche mit den Zielorten als Navigationsziele übereinstimmen, an die Recheneinrichtung übermittelt werden. Zusätzlich oder alternativ kann sich das zumindest eine weitere Kraftfahrzeug bereits an einem der Zielorte befinden und Daten zu dem jeweiligen Zielort an die Recheneinrichtung übermitteln. Zum Bestimmen der Daten kann das zumindest eine weitere Kraftfahrzeug bevorzugt eine Erfassungseinrichtung, wie beispielsweise eine Kamera und/oder einen oder mehrere Sensoren, welche auf eine Umgebung des Kraftfahrzeugs gerichtet sind, aufweisen. Die Erfassungseinrichtung kann dazu eingerichtet sein, Personen und/oder Objekte in der Umgebung des Kraftfahrzeugs zu erfassen. Zusätzlich oder alternativ kann es vorgesehen sein, dass die zu den möglichen alternativen Zielorten bereitgestellten Daten von jeweils einer Erfassungseinrichtung an dem jeweiligen möglichen alternativen Zielort selbst bereitgestellt werden. So kann es vorgesehen sein, dass es sich bei der Erfassungseinrichtung um einen Parkplatzsensor eines Parkhauses oder Parkplatzes an dem Bestimmungsort handelt und diese als Daten eine Parkplatzbelegung an die Recheneinrichtung übermittelt. Zusätzlich oder alternativ kann es vorgesehen sein, dass die von dem zumindest einen weiteren Kraftfahrzeug und/oder von der Erfassungseinrichtung an dem jeweiligen Zielort bereitgestellten Daten, wie beispielsweise Parkdaten und/oder Navigationsziele und/oder Verkehrsflussdaten, an die Recheneinrichtung übermittelt und in dieser gesammelt oder gespeichert werden. Zusätzlich oder alternativ kann es vorgesehen sein, dass die Recheneinrichtung dazu eingerichtet ist, die empfangenen Daten auszuwerten. Mit anderen Worten kann die Recheneinrichtung dazu eingerichtet sein, Schwarmdaten zu analysieren. So kann die Recheneinrichtung beispielsweise dazu eingerichtet sein, eine Belegung der Parkplätze an dem Bestimmungsort und/oder einen Verkehrsfluss und/oder ein Verkehrsaufkommen der Kraftfahrzeuge an den jeweiligen möglichen alternativen Zielorten zu ermitteln.

Schließlich wird ein Zielort aus den mehreren möglichen alternativen Zielorten unter Berücksichtigung der prädizierten Auslastung an den Zielorten ausgewählt. Beispielsweise kann die prädizierte Auslastung an den jeweiligen möglichen alternativen Zielorten dem Fahrer mittels einer Ausgabeeinrichtung, wie zum Beispiel auf einem Display, ausgegeben werden. Damit kann der Fahrer den gewünschten Zielort selbst wählen, welcher Zielort vorgegeben werden soll. Alternativ kann die Recheneinrichtung auch dazu eingerichtet sein, den Zielort nach einem vorbestimmten Kriterium oder einer vorbestimmten Bedingung, welche beispielsweise durch den Fahrer vorab festgelegt werden kann, auszuwählen. Beispielsweise kann die Recheneinrichtung dazu eingerichtet sein, den Zielort mit der geringsten prädizierten Auslastung auszuwählen.

Zum Beispiel möchte eine Familie an einem warmen Sommertag in ein Schwimmbad fahren. Der Fahrer wählt daher in dem Navigationssystem oder dem Navigationsgerät ein präferiertes Schwimmbad als Bestimmungsort aus. Über die Schwarmdaten, welche zum Beispiel von weiteren Kraftfahrzeugen und/oder durch eine Erfassungseinrichtung an dem Bestimmungsort bereitgestellt werden, wird die, insbesondere aktuelle, Auslastung der Schwimmbäder in der Umgebung ermittelt. Es zeigt, dass das präferierte Schwimmbad - Bestimmungsort - derzeit verglichen mit den anderen Schwimmbädern - mögliche alternative Zielorte - in der Umgebung relativ leer ist. Allerdings ist aus historischen Daten bekannt, dass die Personen sich in diesem Schwimmbad für gewöhnlich sehr lange aufhalten und im weiteren Tagesverlauf das Schwimmbad noch voller wird. Zudem befindet sich ein Großteil des sich in Bewegung befindlichen Schwarm - weitere Kraftfahrzeuge mit dem gleichen Navigationsziele als Bestimmungsort - auf dem Weg zu diesem Schwimmbad. Dem Fahrer wird ein alternatives Schwimmbad mit geringerer Auslastung als dem Schwimmbad, welches er als Bestimmungsort gewählt hat, angeboten oder ausgegeben. Dabei wird bereits berücksichtigt, dass sich ein gewisser Teil des sich in Bewegung befindlichen Schwarms ebenfalls für das alternative Schwimmbad - den bestimmten Zielort - entscheidet.

Erfindungsgemäß ist vorgesehen, dass die Auslastung an dem Bestimmungsort und an den möglichen alternativen Zielorten durch eine Reaktion weiterer Kraftfahrzeuge, die aus ihren Navigationsdaten hervorgeht, bei einer alternativen Routenführungen der weiteren Kraftfahrzeuge zu dem Bestimmungsort und zu den möglichen alternativen Zielorten bestimmt wird.

Dadurch ergibt sich der Vorteil, dass ein Zielort bestimmt wird, welcher für den Nutzer, insbesondere zeitlich, besonders effizient ist. Zudem wird der Zielort auf besonders zuverlässige Art und Weise und unter Berücksichtigung des Kunden- oder Fahrerwunsches bestimmt. Der Fahrer oder Nutzer erhält dadurch ferner eine besonders zuverlässige Unterstützung bei der Suche oder Auswahl nach einem geeigneten Zielort.

Eine Ausführungsform sieht vor, dass als die zu dem Bestimmungsort bereitgestellten Daten eine Belegung von Parkplätzen an dem Bestimmungsort umfassen. Zum Bestimmen einer Belegung von Parkplätzen an dem Bestimmungsort kann zumindest ein weiteres Kraftfahrzeug an die Recheneinrichtung übermitteln, dass es sich zu oder auf dem Parkplatz bewegt. Beispielsweise kann dazu zumindest eine weitere Kraftfahrzeuge, insbesondere ein Assistenzsystem des weiteren Kraftfahrzeugs, welches einen Einpark- und Ausparkvorgang des zumindest einen weiteren Kraftfahrzeugs unterstützt, GPS-Daten und/oder Zeitangaben an die Recheneinrichtung übermitteln. Zusätzlich oder alternativ kann zum Bestimmen der Belegung von Parkplätzen an dem Bestimmungsort das zumindest eine weitere Kraftfahrzeug, welches über Umfeldsensoren verfügt, weitere Kraftfahrzeuge, zum Beispiel auf dem Parkplatz und/oder am Straßenrand, oder freie Parklücken, insbesondere inklusive GPS-Daten und/oder einer Zeitangabe, detektieren und diese Daten an die Recheneinrichtung übermitteln. Diese Daten können von der Recheneinrichtung gesammelt und ausgewertet werden, um eine Belegung der Parkplätze oder eine Belegungswahrscheinlichkeit der Parkplätze zu ermitteln. Um eine Belegungswahrscheinlichkeit der Parkplätze ermitteln zu können, kann es vorgesehen sein, dass Navigationsziele des zumindest einen weiteren Kraftfahrzeugs oder mehrerer weiterer Kraftfahrzeuge mit dem Bestimmungsort verglichen und so eine Wahrscheinlichkeit gebildet werden kann, wo der Fahrer oder das Kraftfahrzeug an dem Bestimmungsort parkt. Zusätzlich oder alternativ kann die Recheneinrichtung dazu eingerichtet sein, die Parkplätze dem Bestimmungsort zuzuordnen, um von der Belegung der Parkplätze auf die Auslastung an dem Bestimmungsort zu schließen. Zu dem Bestimmungsort kann die Auslastung an den Parkplätzen in einer Belegungskarte, insbesondere wann die Parkplätze wie belegt sind, der Recheneinrichtung hinterlegt werden.

Zusätzlich oder alternativ können als die zu dem Bestimmungsort bereitgestellten Daten eine Anzahl an Personen an dem Bestimmungsort umfassen. Je nach Bestimmungsort kann es relevant sein, die Anzahl der Personen und/oder Objekte, welche sich im Umfeld des Bestimmungsorts bewegen, zu ermitteln und an die Recheneinrichtung zu senden. Beispielsweise ist es wahrscheinlich, dass der Bestimmungsort höher ausgelastet ist, je mehr Personen sich zu dem Bestimmungsort bewegen. Die Anzahl der Personen und/oder Objekte an dem Bestimmungsort kann beispielsweise durch eine Erfassungseinrichtung des zumindest einen weiteren Kraftfahrzeugs, welches sich an dem Bestimmungsort befindet, bestimmt werden. Beispielsweise kann das zumindest eine weitere Kraftfahrzeug als Erfassungseinrichtung eine Kamera und/oder ein Radar aufweisen, welche dazu eingerichtet ist, eine Objekterkennung durchzuführen.

Ferner umfassen die zu dem Bestimmungsort bereitgestellten Daten mit dem Bestimmungsort korrespondierende Navigationsziele weiterer Kraftfahrzeuge.

So kann die Recheneinrichtung beispielsweise dazu eingerichtet sein, zu bestimmen, welche der weiteren Kraftfahrzeuge als Navigationsziele den Bestimmungsort vorgegeben haben.

Zusätzlich können als die zu dem Bestimmungsort bereitgestellten Daten Informationen über eine Veranstaltung an dem Bestimmungsort umfassen. Die Informationen über eine Veranstaltung können beispielsweise Datum und/oder Uhrzeit und/oder den genauen Ort der Veranstaltung und/oder eine Anzahl verkaufter Tickets zu der Veranstaltung umfassen.

Neben der Ermittlung der Auslastung an dem Bestimmungsort anhand der Schwarmdaten, liegt der Erfindung die Erkenntnis zugrunde, dass die Bewertung hinsichtlich der Aktualität der Daten von entscheidender Bedeutung ist. Aus diesem Grund sieht eine vorteilhafte Weiterbildung vor, dass beim Ermitteln der Auslastung an dem Bestimmungsort ein Zeitpunkt der zum Bestimmungsort bereitgestellten Daten und/oder an den Zielorten ein Zeitpunkt zu den Zielorten bereitgestellten Daten berücksichtigt wird. Beispielsweise können sämtliche an die Recheneinrichtung übermittelten Daten mit Zeitangaben und/oder GPS-Daten versehen sein. Zusätzlich oder alternativ kann es vorgesehen sein, dass die von der Recheneinrichtung empfangenen Daten nach einer vorbestimmten Zeitspanne, insbesondere in Abhängigkeit von der Art der Eingangsdaten, verworfen werden. Auf diese Weise kann besonders zuverlässig ermittelt werden, was die aktuelle Auslastung an dem Bestimmungsort und/oder dem Zielort ist.

Die Auslastung wird an dem Bestimmungsort durch Bewegungstrends, insbesondere weiterer Kraftfahrzeuge, zu dem Bestimmungsort und/oder durch eine Reaktion weiterer Kraftfahrzeuge bei einer alternativen Routenführungen der weiteren Kraftfahrzeuge zu dem Bestimmungsort bestimmt. Mit "Bewegungstrends" sind insbesondere Bewegungen oder geplante Routen der weiteren Kraftfahrzeuge zu dem Bestimmungsort gemeint. Beispielsweise kann die Recheneinrichtung des Kraftfahrzeugs von einer fahrzeugexternen Einheit die zu dem Bestimmungsort gleichen Zielorte der weiteren Kraftfahrzeuge empfangen und auswerten. Mit anderen Worten kann eine Bewegung oder Strömung von weiteren Kraftfahrzeugen zu dem Bestimmungsort hin bei der Bestimmung der Auslastung an dem Bestimmungsort berücksichtigt werden. Mit "historischen Daten" ist insbesondere gemeint, dass eine vorbestimmte Uhrzeit oder ein vorbestimmter Zeitpunkt berücksichtigt wird, wann und/oder wie viele Kraftfahrzeuge oder Objekte sich zu einer vorbestimmten Uhrzeit an dem Bestimmungsort befunden haben oder befinden werden. Gemäß der Erfindung wird auch eine Reaktion weiterer Kraftfahrzeuge berücksichtigt. Das heißt, es können Navigationsdaten weiterer Kraftfahrzeuge, welche aufgrund einer alternativen Routenführung oder einer Routenumplanung zu dem Bestimmungsort geführt werden. Mit anderen Worten wird eine Reaktion eines Schwarms weiterer Kraftfahrzeuge zu dem Bestimmungsort hin berücksichtigt.

Die prädizierte Auslastung an den möglichen alternativen Zielorten wird durch Bewegungstrends, insbesondere weiterer Kraftfahrzeuge, zu den möglichen alternativen Zielorten und durch eine Reaktion weiterer Kraftfahrzeuge bei einer alternativen Routenführungen der weiteren Kraftfahrzeuge zu den möglichen alternativen Zielorten bestimmt werden. Mit "Bewegungstrends" sind insbesondere Bewegungen oder geplante Routen der weiteren Kraftfahrzeuge zu den möglichen alternativen Zielorten gemeint. Beispielsweise kann die Recheneinrichtung des Kraftfahrzeugs von einer fahrzeugexternen Einheit die zu den möglichen alternativen Zielorten gleichen Zielorte der weiteren Kraftfahrzeuge empfangen und auswerten. Mit anderen Worten kann eine Bewegung oder Strömung von weiteren Kraftfahrzeugen zu den jeweiligen möglichen alternativen Zielorten hin bei der Bestimmung der Auslastung an den jeweiligen möglichen alternativen Zielorten berücksichtigt werden. Mit "historischen Daten" ist insbesondere gemeint, dass eine vorbestimmte Uhrzeit oder ein vorbestimmter Zeitpunkt berücksichtigt wird, wann und/oder wie viele Kraftfahrzeuge oder Objekte sich zu einer vorbestimmten Uhrzeit an den möglichen alternativen Zielorten befunden haben oder befinden werden. Gemäß der Erfindung wird auch eine Reaktion weiterer Kraftfahrzeuge berücksichtigt. Das heißt, es können Navigationsdaten weiterer Kraftfahrzeuge, welche aufgrund einer alternativen Routenführung oder eine Routenumplanung den möglichen alternativen Zielorten geführt werden. Mit anderen Worten wird eine Reaktion eines Schwarms weiterer Kraftfahrzeuge zu den möglichen alternativen Zielorten hin berücksichtigt.

Gemäß einer vorteilhaften Weiterbildung wird die die Auslastung an dem Bestimmungsort und/oder an den möglichen alternativen Zielorten zusätzlich durch historische Daten bestimmt.

In vorteilhafter Weise werden die möglichen alternativen Zielorte unter Berücksichtigung einer zu dem Bestimmungsort vergleichbaren Strecke ausgehend von einem Abfahrort des Kraftfahrzeugs und/oder einer Historie von Zielorten, welche in der Recheneinrichtung hinterlegt sind, und/oder anhand von Präferenzen ermittelt und/oder die möglichen alternativen Zielorte ermittelt, welche sich in einer vorbestimmten Umgebung des Bestimmungsortes befinden. Mit anderen Worten kann die Recheneinrichtung dazu eingerichtet sein, zu dem Bestimmungsort Alternativen zu dem Bestimmungsort auszugeben oder anzubieten. Diese Alternativen, also mögliche alternative Zielorte, können auf Basis der Historie, also Historie-Daten der bisher angefahrenen Ziele des Kraftfahrzeugs, und/oder auf Basis alternativer Ziele im Umfeld des Bestimmungsortes und/oder alternativer Ziele mit einer vergleichbar zu fahrenden Strecke bestimmt werden. Zusätzlich oder alternativ können diese Alternativen auch anhand von Präferenzen, insbesondere eines Fahrers des Kraftfahrzeugs, bestimmt werden. Beispielsweise können zum Bestimmen der Präferenzen des Fahrers Navigationsdaten des Kraftfahrzeugs ausgewertet werden. Dabei kann bestimmt werden, welche Orte der Fahrer am häufigsten besucht oder angefahren hat. Beispielsweise kann bei der Bestimmung oder Ermittlung der Präferenzen des Fahrers auch eine Uhrzeit berücksichtigt werden. Zusätzlich können die bestimmten möglichen alternativen Zielorte entsprechend der Auslastung an den Zielorten durch die Recheneinrichtung, insbesondere aufsteigend oder absteigend, sortiert werden.

Zusätzlich kann die Recheneinrichtung zum Ermitteln der mehreren möglichen alternativen Zielorte Vorlieben, insbesondere vorbestimmte Orte oder Locations des Fahrers oder Nutzers, berücksichtigen. Dazu kann die Recheneinrichtung beispielsweise dazu eingerichtet sein, Bewegungsdaten des Fahrers oder Nutzers auszuwerten. Wenn der Fahrer beispielsweise gut besuchte Cafés, also einen vorbestimmten Bestimmungsort, sehr häufig anfährt, wie lange er sich an dem vorbestimmten Bestimmungsort aufhält oder an leeren Cafés vorbeifährt, obwohl der Fahrer unmittelbar danach ein Café besucht, so kann die Recheneinrichtung diese Vorlieben erkennen und speichern. Sind diese Vorlieben als Vorgaben bekannt, kann die Recheneinrichtung dazu eingerichtet sein, selbstständig alternative Zielorte vorschlagen. Zusätzlich oder alternativ kann der Fahrer diese Prämissen der Recheneinrichtung vorgeben oder ändern.

Zu der Erfindung gehört auch ein System zum Ermitteln eines von einem Bestimmungsort verschiedenen Zielortes für ein Kraftfahrzeug. Das System umfasst eine Recheneinrichtung, welche dazu eingerichtet ist, eine Auslastung an einem vorgegebenen Bestimmungsort basierend auf zu dem Bestimmungsort bereitgestellten Daten zu ermitteln, wobei die Recheneinrichtung ferner dazu eingerichtet ist, mehrere von dem Bestimmungsort verschiedene mögliche alternative Zielorte auf Basis der zum Bestimmungsort bereitgestellten Daten zu ermitteln, wenn die Auslastung einen vorbestimmten Auslastungsschwellwert überschreitet. Ferner ist die Recheneinrichtung dazu eingerichtet, eine prädizierten Auslastung an den möglichen alternativen Zielorten basierend auf zu den möglichen alternativen Zielorten bereitgestellten Daten zu ermitteln und einen Zielort aus den mehreren möglichen alternativen Zielorten unter Berücksichtigung der prädizierten Auslastung an den möglichen alternativen Zielorten auszuwählen.

In vorteilhafter Weise sind die zu dem Bestimmungsort und/oder zu den Zielorten bereitgestellten Daten durch eine Erfassungseinrichtung zumindest eines weiteren Kraftfahrzeugs. Die Erfassungseinrichtung des zumindest einen Kraftfahrzeugs kann ein Navigationssystem und/oder eine Kamera und/oder zumindest einen Umfeldsensor umfassen. Zusätzlich oder alternativ können die zu dem Bestimmungsort und/oder zu den Zielorten bereitgestellten Daten durch eine Erfassungseinrichtung an dem Bestimmungsort und/oder Zielort bereitstellbar sein. Die Erfassungseinrichtung an dem Bestimmungsort und/oder an den Zielorten kann eine Kamera und/oder einen Umfeldsensor und/oder einen Parkplatzbelegungssensor aufweisen.

Zu der Erfindung gehört auch ein Kraftfahrzeug mit dem erfindungsgemäßen System. Das Kraftfahrzeug ist bevorzugt als Kraftwagen, insbesondere als Personenkraftwagen, ausgebildet. Bei dem System kann es sich beispielsweise um ein Navigationssystem oder ein Fahrerassistenzsystem des Kraftfahrzeugs handeln.

Zu der Erfindung gehören auch Weiterbildungen des erfindungsgemäßen Systems und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems und des erfindungsgemäßen Kraftfahrzeugs hier nicht noch einmal beschrieben.

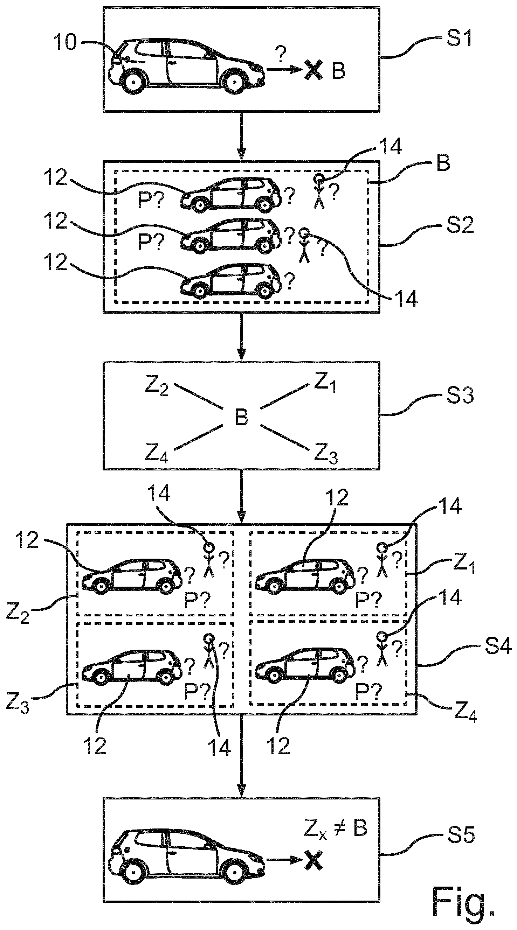

Im Folgenden ist ein Ausführungsbeispiel der Erfindung beschrieben. Hierzu zeigt die einzige Figur in einem schematischen Ablaufdiagramm Verfahrensschritte eines Verfahrens zum Ermitteln eines von einem Bestimmungsort verschiedenen Zielortes.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar.

In einem ersten Verfahrensschritt S1 wird ein Bestimmungsort B vorgegeben. Bei dem Bestimmungsort B kann es sich um einen Point of Interest (kurz POI, Ort von Interesse) handeln. Ausgehend von einem Abfahrort des Kraftfahrzeugs 10 kann ein Fahrerassistenzsystem, wie beispielsweise ein Navigationssystem des Kraftfahrzeugs 10, dazu eingerichtet sein, das Kraftfahrzeug 10 von dem Abfahrort zu dem Bestimmungsort B zu führen oder zu navigieren. Das Vorgeben des Bestimmungsortes B kann auf zwei unterschiedliche Arten erfolgen. Zum einen kann ein Fahrer des Kraftfahrzeugs 10 in das Navigationssystem den Bestimmungsort B, also das Navigationsziel, eingeben. Zum anderen kann eine Recheneinrichtung dazu eingerichtet sein, ein Fahrverhalten des Fahrers zu analysieren und ermitteln, welches Ziel mit welcher Wahrscheinlichkeit durch den Fahrer angefahren wird. Mit anderen Worten kann die Recheneinrichtung dazu eingerichtet sein, eine Fahrhistorie des Fahrers oder Kraftfahrzeugs 10 auszuwerten und auf Basis der Fahrhistorie, also Historie-Daten, den Bestimmungsort B zu ermitteln und vorzugeben. Zusätzlich oder alternativ kann die Recheneinrichtung dazu eingerichtet sein, dem Fahrer unterschiedliche Ziele oder Präferenzen, welche beispielsweise aus Historie-Daten ermittelt wurden, anzuzeigen, von denen der Fahrer eines auswählen kann. Beispielsweise kann die Recheneinrichtung dazu eingerichtet sein, die Bestimmungsorte auszusuchen, welche der Fahrer üblicherweise anfährt. Die Recheneinrichtung kann als fahrzeuginterne Einheit, beispielsweise als eine Steuereinrichtung oder elektronische Schaltung, ausgebildet sein. Bevorzugt kann die Recheneinrichtung Teil eines Fahrerassistenzsystems oder des Navigationssystems des Kraftfahrzeugs 10 sein. Alternativ kann die Recheneinrichtung als fahrzeugexterne Einheit, beispielsweise als eine Servereinrichtung, ausgebildet sein. Sobald der Bestimmungsort B vorgegeben ist, kann die Recheneinrichtung oder das Navigationssystem dazu eingerichtet sein, eine Ankunftszeit an dem Bestimmungsort B zu ermitteln.

Ist der Bestimmungsort B vorgegeben, so kann die Recheneinrichtung dazu eingerichtet sein, eine Ankunftszeit an dem Bestimmungsort, insbesondere auf Basis der bestimmten Route, zu berechnen oder zu ermitteln.

In einem zweiten darauf folgenden Verfahrensschritt S2 ist die Recheneinrichtung dazu eingerichtet, eine Auslastung an dem Bestimmungsort B basierend auf zu dem Bestimmungsort bereitgestellten Daten zu ermitteln. Dabei wird bei der Bestimmung der Auslastung an dem Bestimmungsort B bevorzugt die Ankunftszeit, zu welcher das Kraftfahrzeug 10 den Bestimmungsort B erreichen würde, berücksichtigt. Mit "Auslastung" ist hier bevorzugt eine Belegungsdichte oder ein Aufkommen, wie beispielsweise ein Verkehrsaufkommen, oder eine Anzahl an Personen und/oder Kraftfahrzeugen und/oder weiteren Objekten an dem Bestimmungsort gemeint.

Zum Bestimmen der Auslastung an dem Bestimmungsort B können beispielsweise Parkplätze P oder Parkhäuser an dem Bestimmungsort B genutzt werden. Die Parkplätze P können über eine Servereinrichtung verfügen, welche dazu eingerichtet ist, Daten zu den Parkplätzen P an die Recheneinrichtung zu übertragen. Beispielsweise können die Parkplätze P eine Erfassungseinrichtung aufweisen. Die Erfassungseinrichtung kann beispielsweise Parkplatzbelegungssensoren und/oder eine Kamera und/oder einen Umfeldsensor umfassen. Die Erfassungseinrichtung kann dazu eingerichtet sein, Daten von Einpark- und aus Parkvorgängen weiterer Kraftfahrzeuge 12 an den Parkplätzen P und/oder Daten über freie und/oder belegte Parkplätze an den Parkplätzen P und/oder Daten von Personen 14 an den Parkplätzen P zu erfassen. Ferner kann die Erfassungseinrichtung dazu eingerichtet sein, diese Daten zu sammeln oder direkt an die Recheneinrichtung zu übermitteln oder zu senden.

Zusätzlich oder alternativ kann die Auslastung am Bestimmungsort B mithilfe der weiteren Kraftfahrzeuge 12 an dem Bestimmungsort B ermittelt werden. Dazu können die weiteren Kraftfahrzeuge 12 oder zumindest ein weiteres Kraftfahrzeug 12 eine weitere Erfassungseinrichtung aufweisen. Beispielsweise kann die weitere Erfassungseinrichtung einen oder mehrere Umfeldsensoren, wie beispielsweise ein Radar und/oder eine Kamera und/oder einen Ultraschallsensor, umfassen. Die weitere Erfassungseinrichtung kann dazu eingerichtet sein, Objekte, wie beispielsweise Personen, in einer Umgebung des weiteren Kraftfahrzeugs zu erfassen. Zusätzlich oder alternativ kann die weitere Erfassungseinrichtung dazu eingerichtet sein, detektiert Kraftfahrzeuge auf dem Parkplatz P und/oder freie Parklücken auf dem Parkplatz P zu erfassen. Ferner kann die weitere Erfassungseinrichtung dazu eingerichtet sein, die erfassten Daten an die Recheneinrichtung zu übermitteln.

Eine weitere zusätzliche oder alternative Möglichkeit zur Ermittlung der Auslastung an dem Bestimmungsort B besteht darin, dass die Recheneinrichtung dazu eingerichtet ist, mit dem Bestimmungsort B korrespondierende Navigationsziele der weiteren Kraftfahrzeuge 12 zu erfassen. Die Recheneinrichtung kann also bestimmen, welche der weiteren Kraftfahrzeuge 12 sich auch zu dem Bestimmungsort B bewegen.

Die Recheneinrichtung kann wiederum dazu eingerichtet sein, diese Daten als Schwarmdaten zu sammeln und/oder zu speichern und/oder auszuwerten.

Der Erfindung liegt die Erkenntnis zugrunde, dass nicht zu jeder Zeit an dem Bestimmungsort B gleich viel los ist. Entsprechend kann die Recheneinrichtung dazu eingerichtet sein, die Daten auf Aktualität zu filtern. Dazu kann es beispielsweise vorgesehen sein, dass beim Ermitteln der Auslastung an dem Bestimmungsort B ein Zeitpunkt der zum Bestimmungsort B bereitgestellten Daten berücksichtigt wird. Auf Basis eines aktuellen Zeitpunkts oder einer berechneten Ankunftszeit des Kraftfahrzeugs 10 an dem Bestimmungsort B und auf Basis der zum Bestimmungsort B bereitgestellten Daten kann die Recheneinrichtung eine Auslastung an dem Bestimmungsort B ermitteln.

In einem dritten Verfahrensschritt S3 ermittelt die Recheneinrichtung mehrere von dem Bestimmungsort B verschiedene mögliche alternative Zielorte Z1, Z2, Z3, Z4 auf Basis der zum Bestimmungsort B bereitgestellten Daten, wenn die Auslastung einen vorbestimmten Auslastungsschwellwert überschreitet. Mit anderen Worten kann die Recheneinrichtung dazu eingerichtet sein, eine Änderung des Bestimmungsortes B aufgrund der ermittelten Auslastung an dem Bestimmungsort B durchzuführen. Dazu kann der Recheneinrichtung beispielsweise ein vorbestimmter Wert eines Auslastungsschwellwert hinterlegt sein. Überschreitet die erfasste Auslastung an dem Bestimmungsort B den Auslastungsschwellwert, so ermittelt die Recheneinrichtung mehrere von dem Bestimmungsort B verschiedene mögliche alternative Zielorte Z1, Z2, Z3, Z4. Bei diesen Zielorten Z1, Z2, Z3, Z4 kann es sich um Orte der gleichen Kategorie, wie der Bestimmungsort B handeln. Bei den mehreren Zielorten Z1, Z2, Z3, Z4 kann es sich bevorzugt um zu dem Bestimmungsort B korrespondierende Orte oder Points of Interest handeln. Die möglichen alternativen Zielorte Z1, Z2, Z3, Z4 können dabei unter Berücksichtigung einer zu dem Bestimmungsort B vergleichbaren Strecke ausgehend von einem Abfahrort des Kraftfahrzeugs 10 ermittelt werden. Beispielsweise kann wenn als Bestimmungsort B ein erstes Café ausgewählt wurde, als mögliche alternative Zielorte Z1, Z2, Z3, Z4 weitere Cafés, welches sich in einer gleichen Distanz, also vergleichbaren Strecke ausgehend von dem Abfahrort des Kraftfahrzeugs befinden, ermittelt werden. Befindet sich beispielsweise das erste Café von dem Abfahrort des Kraftfahrzeugs 10 10 km von dem Abfahrort des Kraftfahrzeugs 10 entfernt, so können als mögliche alternative Zielorte weitere Cafés mit der gleichen Entfernung oder einer ähnlichen Entfernung von dem Abfahrort des Kraftfahrzeugs 10 bestimmt werden. So kann es beispielsweise vorgesehen sein, dass weitere Cafés in einer Entfernung von 10 km oder in einer Entfernung von 5 km bis 15 km bestimmt werden. Zusätzlich oder alternativ kann eine Toleranz, also eine zulässige Differenz zu der eigentlichen Entfernung, bei der Berücksichtigung der Entfernung berücksichtigt werden.

Zusätzlich oder alternativ kann es vorgesehen sein, dass die möglichen alternativen Zielorte Z1, Z2, Z3, Z4 unter Berücksichtigung einer Historie von Zielorten, welche in der Recheneinrichtung hinterlegt sind, ermittelt werden. Beispielsweise können verschiedene Zielorte der Recheneinrichtung, an welchen der Fahrer bereits gewesen ist, hinterlegt sein. Diese Zielorte können nach Kategorie und/oder Region aufgeteilt sein. Beim Ermitteln der mehreren möglichen alternativen Zielorte Z1, Z2, Z3, Z4 kann die Recheneinrichtung dazu eingerichtet sein, zu dem Bestimmungsort B vergleichbare, bereits besuchte, Zielorte auszuwählen.

Zusätzlich oder alternativ kann es vorgesehen sein, dass die möglichen alternativen Zielorte Z1, Z2, Z3, Z4 ermittelt werden, welche sich in einer vorbestimmten Umgebung des Bestimmungsortes B befinden. Mit anderen Worten kann die Recheneinrichtung ferner bevorzugt dazu eingerichtet sein, beim Ermitteln der mehreren möglichen alternativen Zielorte Z1, Z2, Z3, Z4 den Bestimmungsort B und/oder einen vorbestimmten Radius um den Bestimmungsort B zu berücksichtigen.

Sind die mehreren von dem Bestimmungsort B verschiedenen möglichen alternativen Zielorte Z1, Z2, Z3, Z4 ermittelt, so ist die Recheneinrichtung in einem vierten Verfahrensschritt S4 dazu eingerichtet, eine prädizierte Auslastung an den möglichen alternativen Zielorten Z1, Z2, Z3, Z4 basierend auf zu den möglichen alternativen Zielorten Z1, Z2, Z3, Z4 bereitgestellten Daten zu ermitteln. Die prädizierten Auslastung der möglichen alternativen Zielorte Z1, Z2, Z3, Z4 setzt sich aus mehreren Faktoren zusammen. Hierzu ist die aktuelle Auslastung an den jeweiligen möglichen alternativen Zielorten Z1, Z2, Z3, Z4 zu berücksichtigen, die angibt, wie stark die jeweiligen Zielorte derzeit frequentiert sind. Die aktuelle Auslastung an den jeweiligen möglichen alternativen Zielorten Z1, Z2, Z3, Z4 kann analog zu der Ermittlung der Auslastung an dem Bestimmungsort B erfolgen.

Die aktuelle Auslastung an den jeweiligen möglichen alternativen Zielorten Z1, Z2, Z3, Z4 ändert sich in Abhängigkeit von Personen oder Kraftfahrzeugen oder Objekten, die die jeweiligen möglichen alternativen Zielorte Z1, Z2, Z3, Z4 verlassen und Personen oder Kraftfahrzeugen oder Objekten, die zu den jeweiligen Zielorten Z1, Z2, Z3, Z4 hinzukommen. Diese Zu- und Abgänge können zum einen auf Basis von historischen Daten abgeschätzt werden. Grundlage dieses Ansatzes, also der Abschätzung auf Basis historischer Daten, ist es, von Bewegungen aus der Vergangenheit Rückschlüsse in die Zukunft zu ziehen. Hierbei kann die durchschnittliche Belegung an den jeweiligen möglichen alternativen Zielorten Z1, Z2, Z3, Z4 an einem entsprechenden Wochentag und oder einer bestimmten Uhrzeit ermittelt werden und als Prognose verwendet werden. Diese Prognose lässt sich mit weiteren Daten verbessern, indem zum Beispiel Wetterzustände, Außentemperatur und/oder Schulferienzeiten ermittelt werden. Auch können Events oder Veranstaltungen, wie zum Beispiel eine Fußball-WM-Übertragung oder ein Konzert im Umfeld beziehungsweise in der Umgebung, genutzt werden, um die Prognosen zu optimieren. Eine weitere Möglichkeit der historischen Datennutzung ist die Ermittlung der durchschnittlichen Aufenthaltsdauer an den jeweiligen Zielorten Z1, Z2, Z3, Z4. Ist aus historischen Daten bekannt, dass die Aufenthaltsdauer an den jeweiligen möglichen alternativen Zielorten Z1, Z2, Z3, Z4, zum Beispiel durchschnittlich 1 Stunde beträgt, kann die Anzahl der Personen und/oder Kraftfahrzeuge und/oder Objekte, welche den jeweiligen Zielort der mehreren möglichen alternativen Zielorte Z1, Z2, Z3, Z4, beispielsweise pro Minute, verlassen bestimmt werden und für die Prognose genutzt werden.

Zusätzlich oder alternativ können Bewegungstrends über die Auswertung der aktuell in Bewegung befindlichen Kraftfahrzeuge 12 zu den mehreren möglichen alternativen Zielorten Z1, Z2, Z3, Z4 berücksichtigt werden. Mit anderen Worten können mit dem Bestimmungsort korrespondierender Navigationsziele der weiteren Kraftfahrzeuge 12 berücksichtigt werden. Im einfachsten Fall können hierbei die bereits beschriebenen Navigationsziele, also die möglichen Zielorte, verwendet werden. Hierbei wird die berechnete Ankunftszeit unter Berücksichtigung vom Standort und/oder Verkehrsinformation des Kraftfahrzeugs 10 verwendet.

Zudem wird hierbei eine Reaktion des Schwarms, also der weiteren Kraftfahrzeuge 12, welche sich zu den jeweiligen Zielorten Z1, Z2, Z3, Z4 bewegen, bei der Ermittlung der Auslastung an den Zielorten berücksichtigt. Hierbei wird davon ausgegangen, dass ein Teil der weiteren Kraftfahrzeuge 12 innerhalb des sich zu einem Bestimmungsort B bewegenden Schwarms intelligent ihre Strategie ändert und gemäß der Auslastung an dem Bestimmungsort B und/oder jeweiligen Zielort anpassen möchte. Hierbei kann zudem berücksichtigt werden, wie viele Personen sich derzeit durchschnittlich im sich bewegenden Schwarm befinden. Dem Fahrer des Kraftfahrzeugs 10 können auf Basis der Kenntnis von den mehreren möglichen alternativen Zielorten Z1, Z2, Z3, Z4, also vergleichbaren POls, von der Recheneinrichtung die mehreren möglichen alternativen Zielorte Z1, Z2, Z3, Z4 angeboten werden. Dadurch wird auch der Schwarm, also die weiteren Kraftfahrzeuge 12, welche sich zu den jeweiligen weiteren Zielorten Z1, Z2, Z3, Z4 bewegen, entsprechend beeinflusst, was zu einer veränderten Auslastung an den jeweiligen Zielorten Z1, Z2, Z3, Z4 führen kann und somit einen direkten Rückschluss auf die Bewertung der jeweiligen Zielorte Z1, Z2, Z3, Z4 zulässt.

In einem letzten fünften Verfahrensschritt S5 wird ein Zielort aus den mehreren möglichen alternativen Zielorten Z1, Z2, Z3, Z4 unter Berücksichtigung der prädizierten Auslastung an den möglichen alternativen Zielorten Z1, Z2, Z3, Z4 ausgewählt. Das kann beispielsweise durch den Fahrer oder automatisch durch die Recheneinrichtung erfolgen. Beispielsweise kann die Recheneinrichtung dazu eingerichtet sein, als den Zielort aus den mehreren möglichen alternativen Zielorten Z1, Z2, Z3, Z4 den Zielort auszuwählen, welcher die geringste Auslastung aufweist. Die Auswahl des jeweiligen Zielortes kann auch nach vorbestimmten Kriterien, welche beispielsweise durch den Fahrer vorgegeben werden können, erfolgen.

Ist der Zielort ausgewählt so erfolgt eine Anpassung der Zielführung. Anstelle den Bestimmungsort B anzusteuern, wird der Zielort angesteuert. Mit anderen Worten wird der Fahrer anstelle zu dem Bestimmungsort B zu dem Zielort navigiert.

Im Folgenden soll noch auf konkrete Beispiele eingegangen werden.

Der Fahrer gibt seinen Bestimmungsort B, also einen Zielwunsch, ein. Auf Basis von Verkehrsinformationen und dem aktuellen Standort des Kraftfahrzeugs 10 wird die Ankunftszeit an dem Bestimmungsort B berechnet. Mithilfe der Ankunftszeit wird die Auslastung an dem Bestimmungsort B nach den oben beschriebenen Verfahren ermittelt. Überschreitet die Auslastung an dem Bestimmungsort B eine Grenze, wird auf Basis von zugeordneten Alternativen, also den mehreren möglichen alternativen Zielorten Z1, Z2, Z3, Z4, und deren prädizierten Auslastung diese als alternative mögliche Zielorte Z1, Z2, Z3, Z4 ermittelt. Diese können dann dem Fahrer als Alternative vorgeschlagen oder automatisch in die Navigation übernommen werden.

Eine Familie möchte an einem warmen Sommertag in ein Schwimmbad fahren. Der Fahrer wählt daher im Navigationssystem ein präferierte Schwimmbad aus. Über die Schwarmdaten wird die aktuelle Auslastung der Schwimmbäder in der Umgebung ermittelt. Es zeigt, dass das präferierte Schwimmbad derzeit verglichen mit den anderen Schwimmbädern in der Umgebung relativ leer ist. Allerdings ist aus historischen Daten bekannt, dass die Personen sich in diesem Schwimmbad für gewöhnlich sehr lange aufhalten und im weiteren Tagesverlauf das Schwimmbad noch voller wird. Zudem befindet sich ein großer Teil des sich in Bewegung befindlichen Schwarms auf dem Weg zu diesem Schwimmbad. Dem Fahrer wird ein alternatives Schwimmbad mit signifikant geringerer Auslastung angeboten. Dabei wird bereits berücksichtigt, dass sich ein gewisser Teil des sich in Bewegung befindlichen Schwarm ebenfalls für das alternative Schwimmbad entscheidet. Zudem ist es möglich, dem Fahrer den aktuellen und die in der Zukunft erwarteten Belegung der Zielorte, also beispielsweise der Schwimmbäder, darzustellen. Diese Prognose kann dem Fahrer als Diagramm angezeigt werden. Hierbei kann der Fahrer sich auf dem direkten Weg zu einem der jeweiligen Zielorte Z1, Z2, Z3, Z4 begeben, weil zum Beispiel die Belegung noch gering ist. Alternativ kann der Fahrer seine Route umplanen und erst zu einem späteren Zeitpunkt zu dem Zielort fahren, da dieser aktuell stark belegt ist, allerdings wird diese Belegung gemäß der Prognose innerhalb zum Beispiel der nächsten 2 Stunden abzunehmen. Ferner kann das Navigationsziel, also der Zielort, bei einer Mehrzieleingabe auch eine Optimierung gemäß den Kundenpräferenzen automatisch durchgeführt werden und so zu einer idealen Reise führen.

Insgesamt zeigt das Beispiel, wie durch die Erfindung ein Verfahren und eine Vorrichtung zur Ermittlung und Nutzung von Auslastungen an POls in einem Kraftfahrzeug durchgeführt werden.

## Patentansprüche

1. Verfahren zum Ermitteln eines von einem Bestimmungsort (B) verschiedenen Zielortes für ein Kraftfahrzeug (10) umfassend die Schritte:
- Vorgeben (S1) eines Bestimmungsortes (B);
- Ermitteln (S2) einer Auslastung an dem Bestimmungsort (B) basierend auf zu dem Bestimmungsort (B) bereitgestellten Daten mittels einer Recheneinrichtung;
- Ermitteln (S3) mehrerer von dem Bestimmungsort (B) verschiedenen möglichen alternativen Zielorten (Z1, Z2, Z3, Z4) auf Basis der zum Bestimmungsort (B) bereitgestellten Daten, wenn die Auslastung einen vorbestimmten Auslastungsschwellwert überschreitet;
- Ermitteln (S4) einer prädizierten Auslastung an den möglichen alternativen Zielorten (Z1, Z2, Z3, Z4) basierend auf zu den möglichen alternativen Zielorten (Z1, Z2, Z3, Z4) bereitgestellten Daten mittels der Recheneinrichtung; und
- Auswählen (S5) eines Zielortes aus den mehreren möglichen alternativen Zielorten (Z1, Z2, Z3, Z4) unter Berücksichtigung der prädizierten Auslastung an den möglichen alternativen Zielorten (Z1, Z2, Z3, Z4),
- wobei die Auslastung an dem Bestimmungsort (B) und an den möglichen alternativen Zielorten (Z1, Z2, Z3, Z4) durch eine Reaktion weiterer Kraftfahrzeuge, die aus ihren Navigationsdaten hervorgeht, bei einer alternativen Routenführungen der weiteren Kraftfahrzeuge zu dem Bestimmungsort (B) und zu den möglichen alternativen Zielorten (Z1, Z2, Z3, Z4) bestimmt wird.

2. Verfahren nach Anspruch 1,
wobei
die zu dem Bestimmungsort (B) bereitgestellten Daten von zumindest einem weiteren Kraftfahrzeug (12) und/oder von zumindest einer Erfassungseinrichtung an dem Bestimmungsort (B) bereitgestellt werden.

3. Verfahren nach Anspruch 1 oder 2,
wobei
beim Bestimmen der Auslastung an dem Bestimmungsort eine aktuelle Auslastung und/oder eine prädizierte Auslastung an dem Bestimmungsort bestimmt wird.

4. Verfahren nach einem der vorhergehenden Ansprüche,
wobei
die zu dem Bestimmungsort (B) bereitgestellten Daten eine Belegung von Parkplätzen (P) an dem Bestimmungsort (B) und/oder eine Anzahl an Personen (14) an dem Bestimmungsort (B) und/oder mit dem Bestimmungsort (B) korrespondierender Navigationsziele weiterer Kraftfahrzeuge (12) und/oder Informationen über eine Veranstaltung an dem Bestimmungsort (B) umfassen.

5. Verfahren nach einem der vorhergehenden Ansprüche,
wobei
beim Ermitteln der Auslastung an dem Bestimmungsort (B) zusätzlich ein Zeitpunkt der zum Bestimmungsort (B) bereitgestellten Daten und/oder an den möglichen alternativen Zielorten (Z1, Z2, Z3, Z4) ein Zeitpunkt zu den möglichen alternativen Zielorten (Z1, Z2, Z3, Z4) bereitgestellten Daten und/oder eine Ankunftszeit des Kraftfahrzeugs (10) an dem Bestimmungsort (B) und/oder dem Zielort berücksichtigt wird.

6. Verfahren nach einem der vorhergehenden Ansprüche,
wobei
die Auslastung an dem Bestimmungsort (B) und/oder an den möglichen alternativen Zielorten (Z1, Z2, Z3, Z4) zusätzlich durch historische Daten bestimmt wird.

7. Verfahren nach einem der vorhergehenden Ansprüche,
wobei
die zu den möglichen alternativen Zielorten (Z1, Z2, Z3, Z4) bereitgestellten Daten von zumindest einem weiteren Kraftfahrzeug (12) und/oder von zumindest einer Erfassungseinrichtung an den jeweiligen möglichen alternativen Zielorten (Z1, Z2, Z3, Z4) bereitgestellt werden.

8. Verfahren nach einem der vorhergehenden Ansprüche,
wobei
die möglichen alternativen Zielorte (Z1, Z2, Z3, Z4) unter Berücksichtigung einer zu dem Bestimmungsort vergleichbaren Strecke ausgehend von einem Abfahrort des Kraftfahrzeugs (10) und/oder einer Historie von Zielorten, welche in der Recheneinrichtung hinterlegt sind, und/oder anhand von Präferenzen ermittelt werden und/oder die möglichen alternativen Zielorte ermittelt werden, welche sich in einer vorbestimmten Umgebung des Bestimmungsortes (B), befinden.

9. Verfahren nach einem der vorhergehenden Ansprüche,
wobei
es sich bei den möglichen alternativen Zielorten um Orte oder Locations der gleichen Kategorie wie der vorgegebene Bestimmungsort handelt.

10. System zum Ermitteln eines von einem Bestimmungsort (B) verschiedenen Zielortes für ein Kraftfahrzeug (10) umfassend:
- eine Recheneinrichtung, welche dazu eingerichtet ist, eine Auslastung an einem vorgegebenen Bestimmungsort (B) basierend auf zu dem Bestimmungsort (B) bereitgestellten Daten zu ermitteln, wobei
- die Recheneinrichtung ferner dazu eingerichtet ist, mehrere von dem Bestimmungsort (B) verschiedene mögliche alternative Zielorte (Z1, Z2, Z3, Z4) auf Basis der zum Bestimmungsort bereitgestellten Daten zu ermitteln, wenn die Auslastung einen vorbestimmten Auslastungsschwellwert überschreitet,
- eine prädizierten Auslastung an den möglichen alternativen Zielorten (Z1, Z2, Z3, Z4) basierend auf zu den möglichen alternativen Zielorten (Z1, Z2, Z3, Z4) bereitgestellten Daten zu ermitteln;
- einen Zielort aus den mehreren möglichen alternativen Zielorten (Z1, Z2, Z3, Z4) unter Berücksichtigung der prädizierten Auslastung an den möglichen Zielorten (Z1, Z2, Z3, Z4) auszuwählen, und
- die Auslastung an dem Bestimmungsort (B) und an den möglichen alternativen Zielorten (Z1, Z2, Z3, Z4) durch eine Reaktion weiterer Kraftfahrzeuge, die aus ihren Navigationsdaten hervorgeht, bei einer alternativen Routenführungen der weiteren Kraftfahrzeuge zu dem Bestimmungsort (B) und zu den möglichen alternativen Zielorten (Z1, Z2, Z3, Z4) zu bestimmen.

11. System nach Anspruch 10,
wobei
die zu dem Bestimmungsort (B) und/oder dem Zielort bereitgestellten Daten durch eine Erfassungseinrichtung zumindest eines weiteren Kraftfahrzeugs (12) und/oder durch eine Erfassungseinrichtung an dem Bestimmungsort (B) und/oder an den möglichen alternativen Zielorten (Z1, Z2, Z3, Z4) bereitstellbar sind.

12. System nach Anspruch 11,
wobei
die Erfassungseinrichtung des zumindest einen weiteren Kraftfahrzeugs (10) ein Navigationssystem und/oder eine Kamera und/oder zumindest einen Umfeldsensor umfasst.

13. System nach Anspruch 11 oder 12,
wobei
die Erfassungseinrichtung an dem Bestimmungsort (B) und/oder den jeweiligen Zielorten (Z1, Z2, Z3, Z4) eine Kamera und/oder einen Umfeldsensor und/oder einen Parkplatzbelegungssensor umfasst.

14. Kraftfahrzeug (10) mit einem System nach einem der Ansprüche 10 bis 13.

## Claims

1. Method for ascertaining a target location for a motor vehicle (10), which target location is different from a destination (B), comprising the steps of:
- specifying (S1) a destination (B);
- ascertaining (S2) a capacity utilization at the destination (B) by means of a computing device and on the basis of data provided with respect to the destination (B);
- ascertaining (S3) a plurality of possible alternative target locations (Z1, Z2, Z3, Z4), which are different from the destination (B), on the basis of the data provided with respect to the destination (B), when the capacity utilization exceeds a predetermined capacity utilization threshold;
- ascertaining (S4) a predicted capacity utilization at the possible alternative target locations (Z1, Z2, Z3, Z4) by means of the computing device and on the basis of the data provided with respect to the possible alternative target locations (Z1, Z2, Z3, Z4); and
- selecting (S5) a target location from the plurality of possible alternative target locations (Z1, Z2, Z3, Z4), taking into account the predicted capacity utilization at the possible alternative target locations (Z1, Z2, Z3, Z4),
- wherein the capacity utilization at the destination (B) and at the possible alternative target locations (Z1, Z2, Z3, Z4) is determined using a reaction of other motor vehicles, which reaction is evident from the navigation data thereof, in the case of alternative routing of the other motor vehicles to the destination (B) and to the possible alternative target locations (Z1, Z2, Z3, Z4).

2. Method according to claim 1,
wherein
the data provided with respect to the destination (B) are provided by at least one other motor vehicle (12) and/or by at least one detection device at the destination (B).

3. Method according to claim 1 or claim 2,
wherein,
when determining the capacity utilization at the destination, a current capacity utilization and/or a predicted capacity utilization at the destination is determined.

4. Method according to any of the preceding claims,
wherein
the data provided with respect to the destination (B) include occupancy of parking spaces (P) at the destination (B) and/or a number of persons (14) at the destination (B) and/or navigation targets of other motor vehicles (12) corresponding to the destination (B), and/or information about an event at the destination (B).

5. Method according to any of the preceding claims,
wherein,
when ascertaining the capacity utilization at the destination (B), a time of the data provided with respect to the destination (B) is additionally taken into account and/or, when ascertaining the capacity utilization at the possible alternative target locations (Z1, Z2, Z3, Z4), a time of the data provided with respect to the possible alternative target locations (Z1, Z2, Z3, Z4) is additionally taken into account, and/or an arrival time of the motor vehicle (10) at the destination (B) and/or at the target location is additionally taken into account.

6. Method according to any of the preceding claims,
wherein
the capacity utilization at the destination (B) and/or at the possible alternative target locations (Z1, Z2, Z3, Z4) is additionally determined using historical data.

7. Method according to any of the preceding claims,
wherein
the data provided with respect to the possible alternative locations (Z1, Z2, Z3, Z4) are provided by at least one other motor vehicle (12) and/or by at least one detection device at the respective possible alternative target locations (Z1, Z2, Z3, Z4).

8. Method according to any of the preceding claims,
wherein
the possible alternative target locations (Z1, Z2, Z3, Z4) are ascertained taking into account a distance comparable to the distance to the destination starting from a departure location of the motor vehicle (10), and/or taking into account a history of target locations which are stored in the computing device, and/or on the basis of preferences and/or the possible alternative target locations which are located in a predetermined surrounding area of the destination (B).

9. Method according to any of the preceding claims,
wherein
the possible alternative target locations are locations or places of the same category as the specified destination.

10. System for ascertaining a target location for a motor vehicle (10), which target location is different from a destination (B), comprising:
- a computing device which is designed to ascertain a capacity utilization at a specified destination (B) on the basis of data provided with respect to the destination (B), wherein
- the computing device is further designed to ascertain, on the basis of the data provided with respect to the destination, a plurality of possible alternative locations (Z1, Z2, Z3, Z4) which are different from the destination (B), if the capacity utilization exceeds a predetermined capacity utilization threshold value,
- to ascertain, on the basis of the data provided with respect to the possible alternative target locations (Z1, Z2, Z3, Z4), a predicted capacity utilization at the possible alternative target locations (Z1, Z2, Z3, Z4);
- to select a target location from the plurality of possible alternative target locations (Z1, Z2, Z3, Z4), taking into account the predicted capacity utilization at the possible target locations (Z1, Z2, Z3, Z4), and
- to determine the capacity utilization at the destination (B) and at the possible alternative target locations (Z1, Z2, Z3, Z4) using a reaction of other motor vehicles, which reaction is evident from the navigation data thereof, in the case of alternative routing of the other motor vehicles to the destination (B) and to the possible alternative target locations (Z1, Z2, Z3, Z4).

11. System according to claim 10,
wherein
the data provided with respect to the destination (B) and/or the target location can be provided by means of a detection device of at least one other motor vehicle (12) and/or by means of a detection device at the destination (B) and/or at the possible alternative target locations (Z1, Z2, Z3, Z4).

12. System according to claim 11,
wherein
the detection device of the at least one other motor vehicle (10) includes a navigation system and/or a camera and/or at least one surroundings sensor.

13. System according to claim 11 or claim 12,
wherein
the detection device at the destination (B) and/or the respective target locations (Z1, Z2, Z3, Z4) includes a camera and/or a surroundings sensor and/or a parking space occupancy sensor.

14. Motor vehicle (10) comprising a system according to any of claims 10 to 13.

## Revendications

1. Procédé pour la détermination d'un lieu d'arrivée différent d'un lieu de destination (B) pour un véhicule automobile (10), comprenant les étapes consistant à :
- prédéfinir (S1) un lieu de destination (B) ;
- déterminer (S2) un taux d'occupation au niveau du lieu de destination (B) sur la base de données fournies pour le lieu de destination (B) par le biais d'un dispositif de calcul ;
- déterminer (S3) plusieurs lieux d'arrivée alternatifs possibles (Z1, Z2, Z3, Z4) différents du lieu de destination (B) sur la base des données fournies pour le lieu de destination (B) lorsque le taux d'occupation dépasse un seuil de taux d'occupation préétabli ;
- déterminer (S4) un taux d'occupation prédit aux lieux d'arrivée alternatifs possibles (Z1, Z2, Z3, Z4) sur la base de données fournies pour les lieux d'arrivée alternatifs possibles (Z1, Z2, Z3, Z4) par le biais du dispositif de calcul ; et
- sélectionner (S5) un lieu d'arrivée parmi les lieux d'arrivée alternatifs possibles (Z1, Z2, Z3, Z4) en tenant compte du taux d'occupation prédit aux lieux d'arrivée alternatifs possibles (Z1, Z2, Z3, Z4),
- dans lequel le taux d'occupation au lieu de destination (B) et aux lieux d'arrivée alternatifs possibles (Z1, Z2, Z3, Z4) est établi par une réaction d'autres véhicules automobiles, qui résulte de leurs données de navigation, lors d'un guidage d'itinéraire alternatif des autres véhicules automobiles vers le lieu de destination (B) et vers les lieux d'arrivée alternatifs possibles (Z1, Z2, Z3, Z4).

2. Procédé selon la revendication 1,
dans lequel
les données fournies pour le lieu de destination (B) sont fournies par au moins un autre véhicule automobile (12) et/ou par au moins un dispositif de détection au lieu de destination (B).

3. Procédé selon la revendication 1 ou 2,
dans lequel
lors de l'établissement du taux d'occupation au lieu de destination, un taux d'occupation actuel et/ou un taux d'occupation prédit au lieu de destination sont établis.

4. Procédé selon l'une des revendications précédentes,
dans lequel
les données fournies pour le lieu de destination (B) comprennent une occupation de places de stationnement (P) au lieu de destination (B) et/ou un nombre de personnes (14) au lieu de destination (B) et/ou des arrivées de navigation d'autres véhicules automobiles (12) correspondant au lieu de destination (B) et/ou des informations sur un évènement au lieu de destination (B).

5. Procédé selon l'une des revendications précédentes,
dans lequel
lors de la détermination du taux d'occupation au lieu de destination (B), un moment des données fournies pour le lieu de destination (B) et/ou aux lieux d'arrivée alternatifs possibles (Z1, Z2, Z3, Z4) un moment des données fournies pour les lieux d'arrivée alternatifs possibles (Z1, Z2, Z3, Z4) et/ou un horaire d'arrivée du véhicule automobile (10) au lieu de destination (B) et/ou au lieu d'arrivée sont en outre pris en compte.

6. Procédé selon l'une des revendications précédentes,
dans lequel
le taux d'occupation au lieu de destination (B) et/ou aux lieux d'arrivée alternatifs possibles (Z1, Z2, Z3, Z4) est en outre établi par des données historiques.

7. Procédé selon l'une des revendications précédentes,
dans lequel
les données fournies pour les lieux d'arrivée alternatifs possibles (Z1, Z2, Z3, Z4) sont fournies par au moins un autre véhicule automobile (12) et/ou par au moins un dispositif de détection aux lieux d'arrivée alternatifs possibles (Z1, Z2, Z3, Z4) respectifs.

8. Procédé selon l'une des revendications précédentes,
dans lequel
les lieux d'arrivée alternatifs possibles (Z1, Z2, Z3, Z4) sont déterminés en tenant compte d'un tronçon comparable au lieu d'arrivée à partir d'un lieu de départ du véhicule automobile (10) et/ou d'un historique de lieux d'arrivée qui sont enregistrés dans le dispositif de calcul et/ou à l'aide de préférences et/ou les lieux d'arrivée alternatifs possibles qui se trouvent dans un environnement préétabli du lieu de destination (B) sont déterminés.

9. Procédé selon l'une des revendications précédentes,
dans lequel
les lieux d'arrivée alternatifs possibles sont des lieux ou des sites de la même catégorie que le lieu de destination prédéfini.

10. Système pour la détermination d'un lieu d'arrivée différent d'un lieu de destination (B) pour un véhicule automobile (10) comprenant :
- un dispositif de calcul, qui est configuré pour déterminer un taux d'occupation à un lieu de destination (B) prédéfini sur la base de données fournies pour le lieu de destination (B), dans lequel
- le dispositif de calcul est en outre configuré pour déterminer plusieurs lieux d'arrivée alternatifs possibles (Z1, Z2, Z3, Z4) différents du lieu de destination (B) sur la base des données fournies pour le lieu de destination lorsque le taux d'occupation dépasse un seuil de taux d'occupation préétabli,
- pour déterminer un taux d'occupation prédit aux lieux d'arrivée alternatifs possibles (Z1, Z2, Z3, Z4) sur la base de données fournies pour les lieux d'arrivée alternatifs possibles (Z1, Z2, Z3, Z4) ;
- pour sélectionner un lieu d'arrivée parmi les lieux d'arrivée alternatifs possibles (Z1, Z2, Z3, Z4) en tenant compte du taux d'occupation prédit aux lieux d'arrivée possibles (Z1, Z2, Z3, Z4), et
- pour déterminer le taux d'occupation au lieu de destination (B) et aux lieux d'arrivée alternatifs possibles (Z1, Z2, Z3, Z4) par une réaction d'autres véhicules automobiles, qui résulte de leurs données de navigation, lors d'un guidage d'itinéraire alternatif des autres véhicules automobiles vers le lieu de destination (B) et vers les lieux d'arrivée alternatifs possibles (Z1, Z2, Z3, Z4).

11. Système selon la revendication 10,
dans lequel
les données fournies pour le lieu de destination (B) et/ou le lieu d'arrivée peuvent être fournies par un dispositif de détection d'au moins un autre véhicule automobile (12) et/ou par un dispositif de détection au lieu de destination (B) et/ou aux lieux d'arrivée alternatifs possibles (Z1, Z2, Z3, Z4).

12. Système selon la revendication 11,
dans lequel
le dispositif de détection de l'au moins un autre véhicule automobile (10) comprend un système de navigation et/ou une caméra et/ou au moins un capteur d'environnement.

13. Système selon la revendication 11 ou 12,
dans lequel
le dispositif de détection comprend, au lieu de destination (B) et/ou aux lieux d'arrivée (Z1, Z2, Z3, Z4) respectifs, une caméra et/ou un capteur d'environnement et/ou un capteur d'occupation de place de stationnement.

14. Véhicule automobile (10) comportant un système selon l'une des revendications 10 à 13.
